# EUROPEAN PATENT APPLICATION

(11) **EP 3 118 729 A1**
(43) Date of publication of application: **18.01.2017**
(21) Application number: 16179170.2
(22) Date of filing: 13.07.2016
(51) Int. Cl.: G06F 3/048, G06F 11/34

(54) **METHOD AND DEVICE FOR PRESENTING TASKS**

(30) Priority: 17.07.2015 CN 201510424783
(71) Applicant: Xiaomi Inc., Beijing 100085 (CN)
(72) Inventor: ZHU, Yifan, BEIJING, 100085 (CN); XU, Lina, BEIJING, 100085 (CN); YANG, Wankun, BEIJING, 100085 (CN)
(74) Representative: Perrot, Emilie

(57) **Abstract**

The present invention relates to a method and a device for presenting tasks. The method includes: acquiring (S101) an active index of each of the tasks which are currently in operation; ranking (S102) the tasks which are currently in operation according to the active indices; and presenting (S103) the tasks which are currently in operation according to the ranking result, wherein the active index refers to a frequency of operation of the task being operated by a user.

## Description

### TECHNICAL FIELD

The present invention generally relates to the field of computer technology, and more particularly, to a method and device for presenting tasks.

### BACKGROUND

With the rapid development of smart terminals, smart terminals are equipped with increasingly high level of software and hardware, and can perform increasing number of tasks in parallel. Most of the smart terminals have functions to allow a user to check all the tasks which are currently in operation. For example, when a user inputs a predetermined command, the smart terminal will present all the tasks which are currently in operation to the user. For now, the smart terminal will typically present all the tasks which are currently in operation to the user in a late-to-early order of starting times.

### SUMMARY

In order to solve the problem in the prior art, the present invention provides a method and a device for presenting tasks.

According to a first aspect, the invention relates to a method for presenting tasks, which is performed by a terminal, comprising:
acquiring an active index of each of the tasks which are currently in operation;
ranking the tasks which are currently in operation according to the active indices; and
presenting the tasks which are currently in operation according to the ranking result,
wherein the active index refers to a frequency of operation of the task by a user.

In a particular embodiment, the step of ranking the tasks which are currently in operation according to the active indices comprises:
deciding whether the active index of each of the tasks is larger than or equal to a threshold;
determining a first group of tasks comprising each task having an active index larger than or equal to the threshold;
determining a second group of tasks comprising each task having an active index smaller than the threshold;
ranking the tasks in the first group according to a high-to-low order of the active indices;
ranking the tasks in the second group according to a late-to-early order of starting times; and
arranging the first group of tasks before the second group of tasks.

In a particular embodiment, the step of ranking the tasks which are currently in operation according to the active indices comprises:
deciding whether the active index of each of the tasks is larger than or equal to a threshold;
determining a first group of tasks comprising each task having an active index larger than or equal to the threshold;
determining a second group of tasks comprising each task having an active index smaller than the threshold;
ranking the tasks in the first group according to a late-to-early order of starting times;
ranking the tasks in the second group according to a late-to-early order of starting times; and
arranging the first group of tasks before the second group of tasks.

In a particular embodiment, the step of ranking the tasks which are currently in operation according to the active indices comprises:
deciding whether the active index of each of the tasks is larger than or equal to a threshold;
determining a first group of tasks comprising each task having an active index larger than or equal to the threshold;
determining a second group of tasks comprising each task having an active index smaller than the threshold;
ranking the tasks in the first group according to a late-to-early order of starting times;
ranking the tasks in the second group according to a high-to-low order of the active indices; and
arranging the first group of tasks before the second group of tasks.

In a particular embodiment, the step of ranking the tasks which are currently in operation according to the active indices comprises:
ranking the tasks according to a high-to-low order of the active indices.

In a particular embodiment, the method further comprises:
after a task is started, updating the active index of the task and storing the updated active index of the task.

According to a second aspect, the invention relates to a device for presenting tasks, which is incorporated in a terminal, comprising:
an index acquiring module configured to acquire an active index of each of the tasks which are currently in operation;
a task ranking module configured to rank the tasks which are currently in operation according to the active indices acquired by the index acquiring module; and
a task presenting module configured to present the tasks which are currently in operation according to the ranking result by the task ranking module,
wherein the active index refers to a frequency of operation of the task by a user.

In a particular embodiment, the task ranking module comprises:
a first deciding sub-module configured to decide whether the active index of each of the tasks which is acquired by the index acquiring module is larger than or equal to a threshold;
a first determining sub-module configured to determine a first group of tasks comprising each task having an active index larger than or equal to the threshold decided by the first deciding sub-module;
a second determining sub-module configured to determine a second group of tasks comprising each task having an active index smaller than the threshold decided by the first deciding sub-module;
a first ranking sub-module configured to rank the tasks in the first group determined by the first determining sub-module according to a high-to-low order of the active indices;
a second ranking sub-module configured to rank the tasks in the second group determined by the second determining sub-module according to a late-to-early order of starting times; and
a third ranking sub-module configured to arrange the first group of tasks before the second group of tasks.

In a particular embodiment, the task ranking module comprises:
a second deciding sub-module configured to decide whether the active index of each of the tasks which is acquired by the index acquiring module is larger than or equal to a threshold;
a third determining sub-module configured to determine a first group of tasks comprising each task having an active index larger than or equal to the threshold decided by the second deciding sub-module;
a fourth determining sub-module configured to determine a second group of tasks comprising each task having an active index smaller than the threshold decided by the second deciding sub-module;
a fourth ranking sub-module configured to rank the tasks in the first group determined by the third determining sub-module according to a late-to-early order of starting times;
a fifth ranking sub-module configured to rank the tasks in the second group determined by the fourth determining sub-module according to a late-to-early order of starting times; and
a sixth ranking sub-module configured to rank arrange the first group of tasks before the second group of tasks.

In a particular embodiment, the task ranking module comprises:
a third deciding sub-module configured to decide whether the active index of each of the tasks which is acquired by the index acquiring module is larger than or equal to a threshold;
a fifth determining sub-module configured to determine a first group of tasks comprising each task having an active index larger than or equal to the threshold decided by the third deciding sub-module;
a sixth determining sub-module configured to determine a second group of tasks comprising each task having an active index smaller than the threshold decided by the third deciding sub-module;
a seventh ranking sub-module configured to rank the tasks in the first group determined by the fifth determining sub-module according to a late-to-early order of starting times;
an eighth ranking sub-module configured to rank the tasks in the second group determined by the sixth determining sub-module according to a high-to-low order of the active indices; and
a ninth ranking sub-module configured to rank arrange the first group of tasks before the second group of tasks.

In a particular embodiment, the task ranking module comprises:
a tenth ranking sub-module configured to rank the tasks according to a high-to-low order of the active indices.

In a particular embodiment, wherein the device further comprises:
an index storing module configured to, after a task is started, update the active index of the task and store the updated active index of the task.

According to a third aspect, the invention relates to a device for presenting tasks, comprising:
a processor; and
a memory for storing instructions executable by the processor;
wherein the processor is configured to perform:
acquiring an active index of each of the tasks which are currently in operation;
ranking the tasks which are currently in operation according to the active indices; and
presenting the tasks which are currently in operation according to the ranking result,
wherein the active index refers to a frequency of operation of the task by a user.

In one particular embodiment, the steps of the method for presenting tasks are determined by computer program instructions.

Consequently, according to a fourth aspect, the invention is also directed to a computer program for executing the steps of a method for presenting tasks as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to embodiments of the present invention may have the following beneficial effects.

In the present invention, after the terminal receives a task presenting instruction, the terminal can rank multiple tasks which are currently in operation according to active indices of the tasks, and present the tasks which are currently in operation according to the ranking result. Thereby, it can improve accuracy of task presenting, and improve user experience.

In the present invention, the terminal can rank a first group of tasks which includes each task having an active index larger than or equal to a threshold according to a high-to-low order of active indices; rank a second group of tasks which includes each task having an active index smaller than the threshold according to a late-to-early order of starting times; and arrange the first group of tasks before the second group of tasks. Thereby, it can improve accuracy of task presenting, and improve user experience.

In the present invention, the terminal can rank a first group of tasks which includes each task having an active index larger than or equal to a threshold according to a late-to-early order of starting times; rank a second group of tasks which includes each task having an active index smaller than the threshold according to a late-to-early order of starting times; and arrange the first group of tasks before the second group of tasks. Thereby, it can improve accuracy of task presenting, and improve user experience.

In the present invention, the terminal can rank a first group of tasks which includes each task having an active index larger than or equal to a threshold according to a late-to-early order of starting times; rank a second group of tasks which includes each task having an active index smaller than the threshold according to a high-to-low order of active indices; and arrange the first group of tasks before the second group of tasks. Thereby, it can improve accuracy of task presenting, and improve user experience.

In the present invention, the terminal can rank the tasks which are currently in operation according to a high-to-low order of active indices. Thereby, it can improve accuracy of task presenting, and improve user experience.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for presenting tasks according to an exemplary embodiment.
Fig. 2 is a flow chart illustrating a process of ranking tasks which are currently in operation according to active indices according to an exemplary embodiment.
Fig. 3 is a schematic diagram illustrating a task presenting page according to an exemplary embodiment.
Fig. 4 is a schematic diagram illustrating a task presenting page according to an exemplary embodiment.
Fig. 5 is a schematic diagram illustrating a task presenting page according to an exemplary embodiment.
Fig. 6 is a schematic diagram illustrating a task presenting page according to an exemplary embodiment.
Fig. 7 is a block diagram of a device for presenting tasks according to an exemplary embodiment.
Fig. 8 is a block diagram of another device for presenting tasks according to an exemplary embodiment.
Fig. 9 is a block diagram of another device for presenting tasks according to an exemplary embodiment.
Fig. 10 is a block diagram of another device for presenting tasks according to an exemplary embodiment.
Fig. 11 is a block diagram of another device for presenting tasks according to an exemplary embodiment.
Fig. 12 is a block diagram of another device for presenting tasks according to an exemplary embodiment.
Fig. 13 is a block diagram of a device for presenting tasks according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

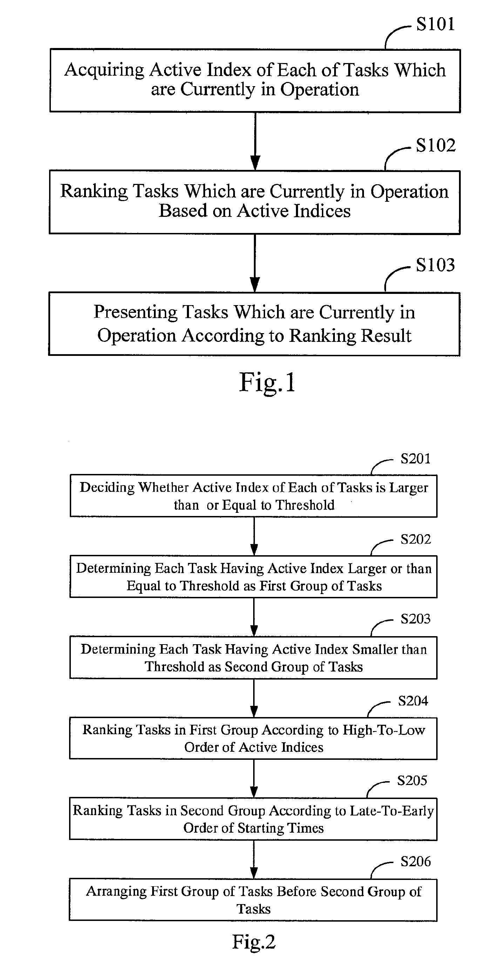

Fig. 1 is a flow chart illustrating a method for presenting tasks according to an exemplary embodiment.

As shown in Fig. 1, the method for presenting tasks is performed by a terminal. The terminal can be a smart terminal which can operate multiple tasks in parallel, such as a smart phone, a tablet computer, a Personal Digital Assistant (PDA). The method for presenting tasks can include the following steps.

In step S101, an active index of each of the tasks which are currently in operation is acquired.

In the present embodiment, when a user of the terminal wants to check all the tasks which are currently in operation in the terminal, the user can input a preset task presenting instruction. The task presenting instruction can be a long press on a HOME button, or double clicks on a HOME button. This is not specifically limited by the present invention.

In the present step, after the terminal receives the task presenting instruction, the terminal can acquire an active index of each of the tasks which are currently in operation. Where, an active index of a task refers to a measurement of the situation of whether the user operates the task. Optionally, the active index can refer to a frequency of the task being started. For example, after the terminal is started, active indices of all tasks are set to a default value such as 0, and mapping relationships between names of tasks and their active indices are stored. When it is detected that a task is started, the active index of the task is increased by 1, so as to update the active index of the task, and the updated active index of the task is stored. The terminal can also reset the active index of the task to the default value when the system is restarted again.

In the present step, after the terminal receives the task presenting instruction, the terminal can acquire an active index of each of the tasks which are currently in operation based on the mapping relationships. However, in practical application, one skilled in the art can set the active indices through other manners. For example, the active index can be a frequency of the task being started. For example, when the terminal detects a task is started, the terminal can calculate a frequency of the task being started based on the times of the task being started, so as to update the active index of the task, and store the updated active index of the task.

In the present embodiment, the tasks are generally applications installed in the terminal. For example, the tasks can include an address book, a notebook which are built in the terminal. The tasks can also include various Applications (APP) loaded by the user in the terminals, such as Sina microblogging, We Chat, Alipay Wallet, etc.

In step S102, the tasks which are currently in operation are ranked according to the active indices.

According to the above step S101, after the terminal acquires the active index of each of the tasks which are currently in operation, the terminal can rank the tasks which are currently in operation according to the active indices. For example, the tasks can be ranked according to a high-to-low order of the active indices, or can be ranked according to the active indices combined with the starting times. This is not specifically limited by the present invention.

In step S103, the tasks which are currently in operation are presented according to the ranking result.

It can be seen from the above description that, in the present invention, after the terminal receives a task presenting instruction, tasks which are currently in operation can be ranked based on the active indices of the tasks, and the tasks which are currently in operation are presented according to the ranking result. Thereby, it can improve accuracy of task presenting and improve user experience.

Fig. 2 is a flow chart illustrating a process of ranking tasks which are currently in operation according to active indices, according to an exemplary embodiment.

As shown in Fig. 2, based on the above embodiment shown in Fig. 1, in the present embodiment, the process of ranking the tasks which are currently in operation according to the active indices can include the following steps.

In step S201, it is decided whether the active index of each of the tasks is larger than or equal to a threshold.

In the present embodiment, the threshold can be set by a developer, or can be set by the user. A task with an active index larger than or equal to the threshold is generally a task frequently operated by the user, and a task with an active index smaller the threshold is generally a task less frequently operated by the user.

In step S202, a first group of tasks comprising each task having an active index larger than or equal to the threshold is determined.

In step S203, a second group of tasks comprising each task having an active index smaller than the threshold is determined.

In the present embodiment, after the terminal acquires the active indices of the tasks which are currently in operation, the terminal can decide whether each of the active indices is larger than or equal to the threshold. In the present step, the tasks which are currently operated in the terminal can be divided into two groups: one group includes each task having an active index larger than or equal to the threshold, and the other group includes each task having an active index smaller than the threshold. In the present embodiment, a first group of task is determined, comprising each task being currently operated in the terminal and having an active index larger than or equal to the threshold, and a second group of task is determined, comprising each task being currently operated in the terminal having an active index smaller than the threshold. It can be understood that, both of the number of the tasks in the first group of tasks and the number of the tasks in the second group of tasks are natural numbers larger than or equal to 0.

In step S204, the tasks in the first group are ranked according to a high-to-low order of the active indices.

Based on the above step S202, when the number of the tasks in the first group is larger than 1, the terminal ranks the tasks in the first group according to a high-to-low order of the active indices. It can be understood that, if the number of the tasks in the first group is 1, it is not necessary to rank the tasks in the first group. If the number of the tasks in the first group is 0, the present step can be skipped.

In step S205, the tasks in the second group are ranked according to a late-to-early order of starting times.

Based on the above step S203, when the number of the tasks in the second group is larger than 1, the terminal ranks the tasks in the second group in which each task has an active index less than the threshold according to a late-to-early order of starting times. In other words, for the second group of tasks, tasks started later is ranked before tasks started early. It can be understood that, if the number of the tasks in the second group is 1, it is not necessary to rank the tasks in the second group. If the number of the tasks in the second group is 0, the present step can be skipped.

In step 206, the first group of tasks is arranged before the second group of tasks.

In the present step, depending on a predetermined presenting direction, the first group of tasks which is arranged in the above step S204 can be ranked before the second group of tasks which is arranged in the above step S205. For example, taking a user facing the screen as a reference, if the terminal presents the tasks in a horizontal left-right direction, in the present step, the first group can be arranged at a left side of the second group, that is, the first group is arranged before the second group; if the terminal presents the tasks in a vertical up-down direction, in the present step, the first group can be arranged at an upper side of the second group, that is, the first group is arranged before the second group.

It should be noted that, in the present invention, the performing order of the above steps S202 and S203 is not limited, and in practical implementation, the step S203 can be performed firstly and the step S202 can be performed subsequently. Also, in the present invention, the performing order of the above steps S204 and S205 is not limited, and in practical implementation, the step S205 can be performed firstly and the step S204 can be performed subsequently.

For example, it is assumed that there are 6 tasks being currently operated in the terminal, each of the tasks has an active index, as shown in Table 1.

**Table 1**

| Task | Active Index |
|---|---|
| M1 | 2 |
| M2 | 4 |
| M3 | 16 |
| M4 | 28 |
| M5 | 7 |
| M6 | 12 |

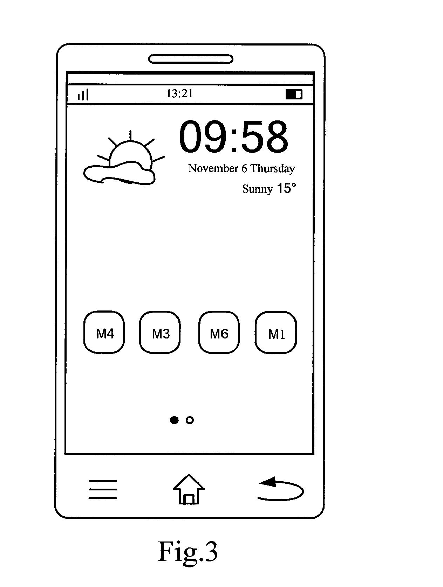

It is assumed that the preset threshold is 10, and based on the active indices of the 6 tasks, three tasks M3, M4 and M6 can be determined as the first group of tasks, and three tasks M1, M2 and M5 can be determined as the second group of tasks. The three tasks in the first group can be arranged according to a high-to-low order of the active indices as: M4, M3 and M6, and it is assumed that the three tasks in the second group can be arranged according to a late-to-early order of starting times as: M1, M2 and M5. The terminal arranges the first group of tasks before the second group of tasks. Thus, the resulted arrangement of the 6 tasks is: M4, M3, M6, M1, M2 and M5. Referring to the task presenting page as shown in Fig. 3, the tasks M4, M3, M6 and M1 are presented in the page, and the tasks M2 and M5 are in a hidden page. The tasks M2 and M5 can be checked by the user by sliding on the screen.

It can be seen from the above description that, in the present invention, the terminal can rank tasks being in operation according to two dimensions: starting times of the tasks and the active indices of the tasks. Thereby, it can improve the accuracy of tasks presenting, and improve user experience.

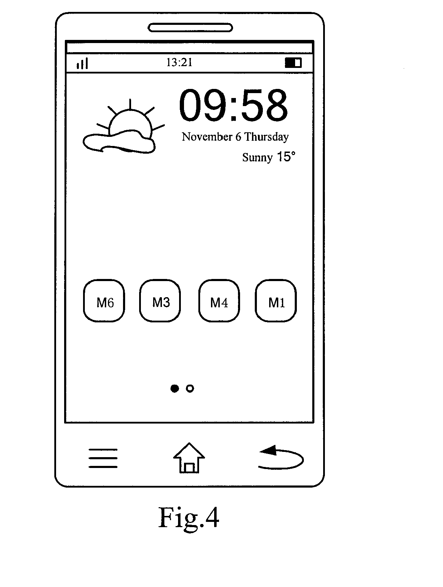

Optionally, in another embodiment of the present invention, for the first group of tasks, the terminal can rank the tasks in the first group tasks according to a late-to-early order of starting times. Still taking the tasks as shown in Table 1 as an example, it is assumed that the task M4 is started earlier than the task M3, the task M3 is started earlier than the task M6. Then, the three tasks in the first group can be arranged according to a late-to-early order of starting times as: M6, M3 and M4. The terminal arranges the first group of tasks before the second group of tasks. Thus, a different arrangement result of the 6 tasks can be obtained as: M6, M3, M4, M1, M2 and M5. Referring to the task presenting page as shown in Fig. 4, the tasks M6, M3, M4 and M1 are presented in the page, and the tasks M2 and M5 are in a hidden page. The tasks M2 and M5 can be checked by the user by sliding on the screen.

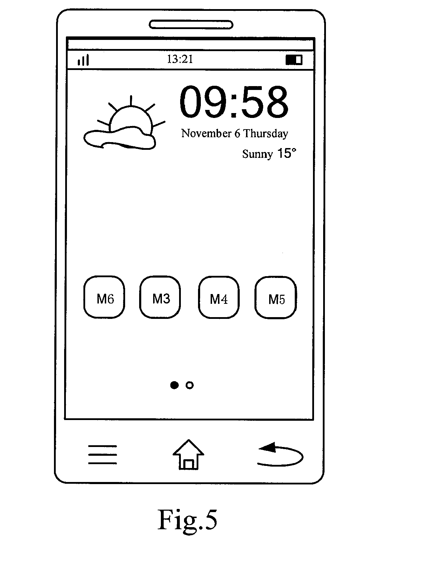

Optionally, in another embodiment of the present invention, for the first group of tasks, the terminal can rank the tasks in the first group tasks according to a late-to-early order of starting times, and for the second group of tasks, the terminal can rank the tasks in the second group according to a high-to-low order of the active indices. Still taking the tasks as shown in Table 1 as an example, it is assumed that the task M4 is started earlier than the task M3, the task M3 is started earlier than the task M6. Then, the three tasks in the first group can be arranged according to a late-to-early order of starting times as: M6, M3 and M4. The three tasks in the second group can be arranged according to a high-to-low order of the active indices as: M5, M2 and M1. Thus, a different arrangement result of the 6 tasks can be obtained as: M6, M3, M4, M5, M2 and M1. Referring to the task presenting page as shown in Fig. 5, the tasks M6, M3, M4 and M5 are presented in the page, and the tasks M2 and M1 are in a hidden page. The tasks M2 and M1 can be checked by the user by sliding on the screen.

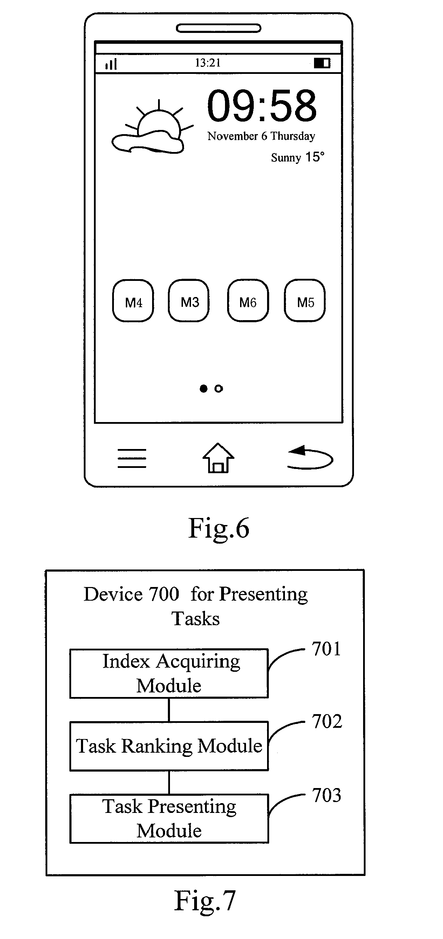

Optionally, in another embodiment of the present invention, the tasks which are currently in operation can be ranked according to a high-to-low order of the active indices. Still taking the tasks as shown in Table 1 as an example, a different arrangement result of the 6 tasks can be obtained as: M4, M3, M6, M5, M2 and M1. Referring to the task presenting page as shown in Fig. 6, the tasks M4, M3, M3 and M5 are presented in the page, and the tasks M2 and M1 are in a hidden page. The tasks M2 and M1 can be checked by the user by sliding on the screen.

Corresponding to the method for presenting tasks according to the above embodiments, the present invention also provides a device for presenting tasks according to the following embodiments.

Fig. 7 is a block diagram of a device for presenting tasks according to an exemplary embodiment.

As shown in Fig. 7, the device 700 for presenting tasks can be incorporated in a terminal and includes: an index acquiring module 701, a task ranking module 702 and a task presenting module 703.

The index acquiring module 701 is configured to acquire an active index of each of the tasks which are currently in operation;
the task ranking module 702 is configured to rank the tasks which are currently in operation according to the active indices acquired by the index acquiring module 701; and
the task presenting module 703 is configured to present the tasks which are currently in operation according to the ranking result by the task ranking module 702,
wherein the active index refers to a frequency of operation of the task by a user.

In the above embodiment, after the terminal receives a task presenting instruction, the terminal can rank multiple tasks which are currently in operation according to active indices of the tasks, and present the tasks which are currently in operation according to the ranking result. Thereby, it can improve accuracy of task presenting, and improve user experience.

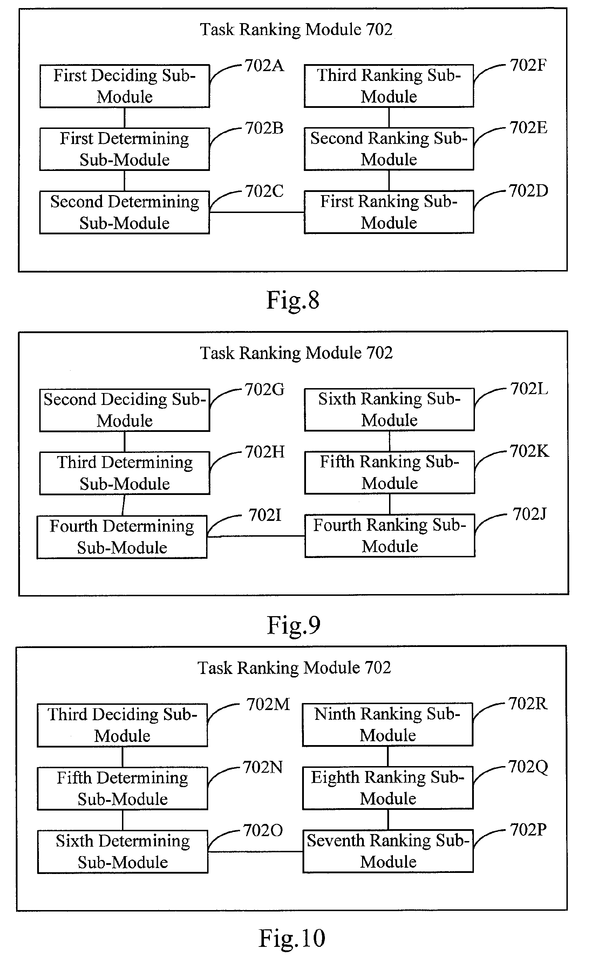

Fig. 8 is a block diagram of another device for presenting tasks according to an exemplary embodiment.

As shown in Fig. 8, based on the embodiment as shown in Fig. 7, in the present embodiment, the task ranking module 702 can include: a first deciding sub-module 702A, a first determining sub-module 702B, a second determining sub-module 702C, a first ranking sub-module 702D, a second ranking sub-module 702E and a third ranking sub-module 702F.

The first deciding sub-module 702A is configured to decide whether the active index of each of the tasks which is acquired by the index acquiring module 701 is larger than or equal to a threshold;
the first determining sub-module 702B is configured to determine a first group of tasks comprising each task having an active index larger than or equal to the threshold decided by the first deciding sub-module 702A;
the second determining sub-module 702C is configured to determine a second group of tasks comprising each task having an active index smaller than the threshold decided by the first deciding sub-module 702A;
the first ranking sub-module 702D is configured to rank the tasks in the first group determined by the first determining sub-module 702B according to a high-to-low order of the active indices;
the second ranking sub-module 702E is configured to rank the tasks in the second group determined by the second determining sub-module 702C according to a late-to-early order of starting times; and
the third ranking sub-module 702F is configured to arrange the first group of tasks before the second group of tasks.

In the above embodiment, the terminal can rank a first group of tasks which includes tasks each having an active index larger than or equal to a threshold according to a high-to-low order of active indices; rank a second group of tasks which includes tasks each having an active index smaller than the threshold according to a late-to-early order of starting times; and arrange the first group of tasks before the second group of tasks. Thereby, it can improve accuracy of task presenting, and improve user experience.

Fig. 9 is a block diagram of another device for presenting tasks according to an exemplary embodiment.

As shown in Fig. 9, based on the embodiment as shown in Fig. 7, in the present embodiment, the task ranking module 702 can include: a second deciding sub-module 702G, a third determining sub-module 702H, a fourth determining sub-module 702I, a fourth ranking sub-module 702J, a fifth ranking sub-module 702K and a sixth ranking sub-module 702L.

The second deciding sub-module 702G is configured to decide whether the active index of each of the tasks which is acquired by the index acquiring module 701 is larger than or equal to a threshold;
the third determining sub-module 702H is configured to determine a first group of tasks comprising each task having an active index larger than or equal to the threshold decided by the second deciding sub-module 702G;
the fourth determining sub-module 702I is configured to determine a second group of tasks comprising each task having an active index smaller than the threshold decided by the second deciding sub-module 702G;
the fourth ranking sub-module 702J is configured to rank the tasks in the first group determined by the third determining sub-module 702H according to a late-to-early order of starting times;
the fifth ranking sub-module 702K is configured to rank the tasks in the second group determined by the fourth determining sub-module 702I according to a late-to-early order of starting times; and
the sixth ranking sub-module 702L is configured to rank arrange the first group of tasks before the second group of tasks.

In the above embodiment, the terminal can rank a first group of tasks which includes tasks each having an active index larger than or equal to a threshold according to a late-to-early order of starting times; rank a second group of tasks which includes tasks each having an active index smaller than the threshold according to a late-to-early order of starting times; and arrange the first group of tasks before the second group of tasks. Thereby, it can improve accuracy of task presenting, and improve user experience.

Fig. 10 is a block diagram of another device for presenting tasks according to an exemplary embodiment.

As shown in Fig. 10, based on the embodiment as shown in Fig. 7, in the present embodiment, the task ranking module 702 can include: a third deciding sub-module 702M, a fifth determining sub-module 702N, a sixth determining sub-module 7020, a seventh ranking sub-module 702P, an eighth ranking sub-module 702Q and a ninth ranking sub-module 702R.

The third deciding sub-module 702M configured to decide whether the active index of each of the tasks which is acquired by the index acquiring module 701 is larger than or equal to a threshold;
the fifth determining sub-module 702N is configured to determine a first group of tasks comprising each task having an active index larger than or equal to the threshold decided by the third deciding sub-module 702M;
the sixth determining sub-module 7020 is configured to determine a second group of tasks comprising each task having an active index smaller than the threshold decided by the third deciding sub-module 702M;
the seventh ranking sub-module 702P is configured to rank the tasks in the first group determined by the fifth determining sub-module 702N according to a late-to-early order of starting times;
the eighth ranking sub-module 702Q is configured to rank the tasks in the second group determined by the sixth determining sub-module 7020 according to a high-to-low order of the active indices; and
the ninth ranking sub-module 702R is configured to rank arrange the first group of tasks before the second group of tasks.

In the above embodiment, the terminal can rank a first group of tasks which includes tasks each having an active index larger than or equal to a threshold according to a late-to-early order of starting times; rank a second group of tasks which includes tasks each having an active index smaller than the threshold according to a high-to-low order of active indices; and arrange the first group of tasks before the second group of tasks. Thereby, it can improve accuracy of task presenting, and improve user experience.

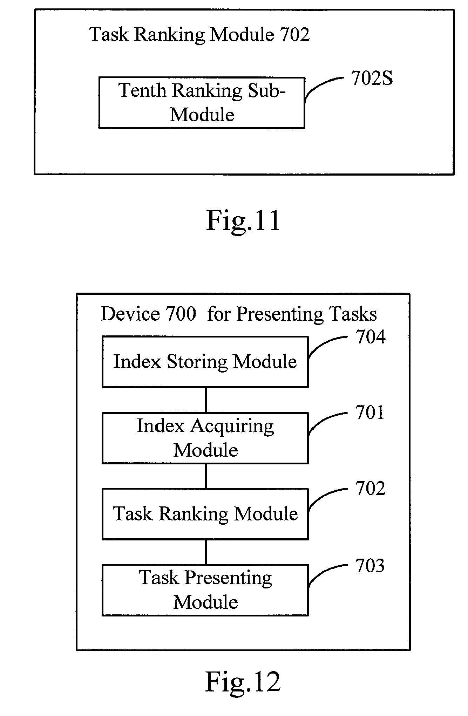

Fig. 11 is a block diagram of another device for presenting tasks according to an exemplary embodiment.

As shown in Fig. 11, based on the embodiment as shown in Fig. 7, in the present embodiment, the task ranking module 702 can include: a tenth ranking sub-module 702S.

The tenth ranking sub-module 702S is configured to rank the tasks according to a high-to-low order of the active indices.

In the above embodiment, the terminal can rank the tasks which are currently in operation according to a high-to-low order of active indices. Thereby, it can improve accuracy of task presenting, and improve user experience.

Fig. 12 is a block diagram of another device for presenting tasks according to an exemplary embodiment.

As shown in Fig. 12, based on the embodiment as shown in Fig. 7, in the present embodiment, the device 700 for presenting tasks further includes: an index storing module 704.

The index storing module 704 is configured to, after a task is started, update the active index of the task and store the updated active index of the task.

The devices as shown in Figs. 7-12 are configured to perform the above methods as shown in Figs. 1-2. Implementation of the functions and operations of the modules in the above devices can be specifically referred to the implementation of the corresponding steps in the above methods, which will not be repeated herein.

For the device embodiments, since they correspond to the method embodiments, they can refer to the related parts of the description of the method embodiments. The device embodiments described above are merely illustrative. The units described as separate may be or may not be physically separate, and the components illustrated as a units may be or may not be physical units, and may be at the same location, or may be distributed to multiple units over the network. A part of or all of the modules can be selected to achieve the objective of the present invention as desired. One skilled in the art can understand and practice the embodiments without paying creative labor.

Correspondingly, the present invention also provides a device for presenting tasks, including: a processor; and a memory for storing instructions executable by the processor; wherein the processor is configured to perform: acquiring an active index of each of the tasks which are currently in operation; ranking the tasks which are currently in operation according to the active indices; and presenting the tasks which are currently in operation according to the ranking result, wherein the active index refers to a frequency of operation of the task by a user.

Correspondingly, the present invention also provides a non-transitory computer readable storage medium, when instructions in the storage medium are executed by the processor of a terminal, the terminal is caused to perform the method for presenting tasks. The method includes: acquiring an active index of each of the tasks which are currently in operation; ranking the tasks which are currently in operation according to the active indices; and presenting the tasks which are currently in operation according to the ranking result, wherein the active index refers to a frequency of operation of the task by a user.

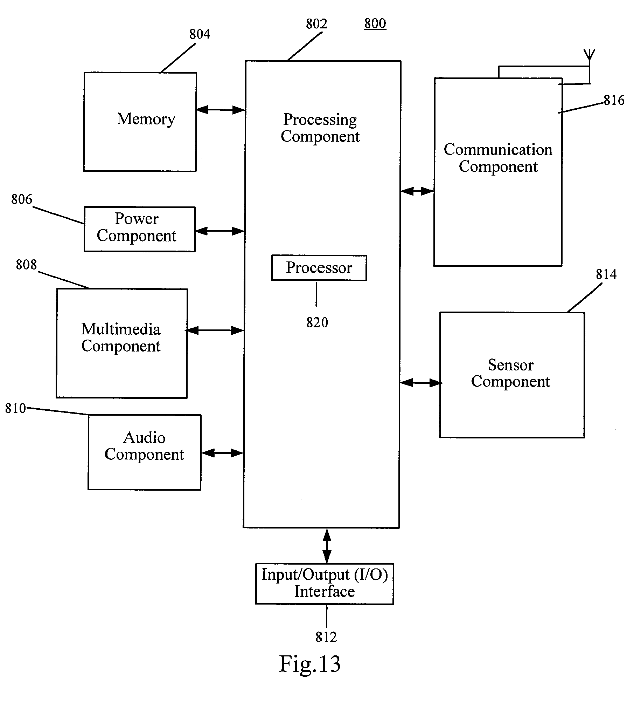

Fig. 13 is a block diagram of a device 800 for presenting tasks according to an exemplary embodiment. For example, the device 800 can be a mobile phone, a computer, a digital broadcast terminal, a messaging device, a gaming console, a tablet, a medical device, exercise equipment, a personal digital assistant, and the like.

Referring to Fig. 13, the device 800 can include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules which facilitate the interaction between the processing component 802 and other components. For instance, the processing component 802 can include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 can include a power management system, one or more power sources, and any other components associated with the generation, management, and distribution of power in the device 800.

The multimedia component 808 includes a screen providing an output interface between the device 800 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 808 includes a front camera and/or a rear camera. The front camera and the rear camera can receive an external multimedia datum while the device 800 is in an operation mode, such as a photographing mode or a video mode. Each of the front camera and the rear camera can be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal can be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons can include, but are not limited to, a home button, a volume button, a starting button, and a locking button.

The sensor component 814 includes one or more sensors to provide status assessments of various aspects of the device 800. For instance, the sensor component 814 can detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 can include a proximity sensor configured to detect the presence of nearby objects without any physical contact. The sensor component 814 can also include a light sensor, such as a CMOS or CCD image sensor, for use in imaging applications. In some embodiments, the sensor component 814 can also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 800 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium can be a ROM, a RAM, a CD-ROM, a magnetic tape, a floppy disc, an optical data storage device, and the like.

## Claims

1. A method for presenting tasks, which is performed by a terminal, **characterized in that** the method comprises:
acquiring (S101) an active index of each of the tasks which are currently in operation;
ranking (S102) the tasks which are currently in operation according to the active indices; and
presenting (S103) the tasks which are currently in operation according to the ranking result,
wherein the active index refers to a frequency of operation of the task by a user.

2. The method for presenting tasks according to claim 1, wherein the step (S102) of ranking the tasks which are currently in operation according to the active indices comprises:
deciding (S201) whether the active index of each of the tasks is larger than or equal to a threshold;
determining (S202) a first group of tasks comprising each task having an active index larger than or equal to the threshold;
determining (S203) a second group of tasks comprising each task having an active index smaller than the threshold;
ranking (S204) the tasks in the first group according to a high-to-low order of the active indices;
ranking (S205) the tasks in the second group according to a late-to-early order of starting times; and
arranging (S206) the first group of tasks before the second group of tasks.

3. The method for presenting tasks according to claim 1, wherein the step (S102) of ranking the tasks which are currently in operation according to the active indices comprises:
deciding (S201) whether the active index of each of the tasks is larger than or equal to a threshold;
determining (S202) a first group of tasks comprising each task having an active index larger than or equal to the threshold;
determining (S203) a second group of tasks comprising each task having an active index smaller than the threshold;
ranking the tasks in the first group according to a late-to-early order of starting times;
ranking the tasks in the second group according to a late-to-early order of starting times; and
arranging the first group of tasks before the second group of tasks.

4. The method for presenting tasks according to claim 1, wherein the step (S102) of ranking the tasks which are currently in operation according to the active indices comprises:
deciding (S201) whether the active index of each of the tasks is larger than or equal to a threshold;
determining (S202) a first group of tasks comprising each task having an active index larger than or equal to the threshold;
determining (S203) a second group of tasks comprising each task having an active index smaller than the threshold;
ranking the tasks in the first group according to a late-to-early order of starting times;
ranking the tasks in the second group according to a high-to-low order of the active indices; and
arranging the first group of tasks before the second group of tasks.

5. The method for presenting tasks according to claim 1, wherein the step (S102) of ranking the tasks which are currently in operation according to the active indices comprises:
ranking the tasks according to a high-to-low order of the active indices.

6. The method for presenting tasks of claim 1, wherein the method further comprises:
after a task is started, updating the active index of the task and storing the updated active index of the task.

7. A device (700) for presenting tasks, which is incorporated in a terminal, **characterized in that** the device (700) comprises:
an index acquiring module (701) configured to acquire an active index of each of the tasks which are currently in operation;
a task ranking module (702) configured to rank the tasks which are currently in operation according to the active indices acquired by the index acquiring module; and
a task presenting module (703) configured to present the tasks which are currently in operation according to the ranking result by the task ranking module,
wherein the active index refers to a frequency of operation of the task by a user.

8. The device (700) for presenting tasks according to claim 7, wherein the task ranking module (702) comprises:
a first deciding sub-module (702A) configured to decide whether the active index of each of the tasks which is acquired by the index acquiring module is larger than or equal to a threshold;
a first determining sub-module (702B) configured to determine a first group of tasks comprising each task having an active index larger than or equal to the threshold decided by the first deciding sub-module;
a second determining sub-module (702C) configured to determine a second group of tasks comprising each task having an active index smaller than the threshold decided by the first deciding sub-module as;
a first ranking sub-module (702D) configured to rank the tasks in the first group determined by the first determining sub-module according to a high-to-low order of the active indices;
a second ranking sub-module (702E) configured to rank the tasks in the second group determined by the second determining sub-module according to a late-to-early order of starting times; and
a third ranking sub-module (702F) configured to arrange the first group of tasks before the second group of tasks.

9. The device (700) for presenting tasks according to claim 7, wherein the task ranking module (702) comprises:
a second deciding sub-module (702G) configured to decide whether the active index of each of the tasks which is acquired by the index acquiring module is larger than or equal to a threshold;
a third determining sub-module (702H) configured to determine a first group of tasks comprising each task having an active index larger than or equal to the threshold decided by the second deciding sub-module;
a fourth determining sub-module (702I) configured to determine a second group of tasks comprising each task having an active index smaller than the threshold decided by the second deciding sub-module;
a fourth ranking sub-module (702J) configured to rank the tasks in the first group determined by the third determining sub-module according to a late-to-early order of starting times;
a fifth ranking sub-module (702K) configured to rank the tasks in the second group determined by the fourth determining sub-module according to a late-to-early order of starting times; and
a sixth ranking sub-module (702L) configured to rank arrange the first group of tasks before the second group of tasks.

10. The device (700) for presenting tasks according to claim 7, wherein the task ranking module (702) comprises:
a third deciding sub-module (702M) configured to decide whether the active index of each of the tasks which is acquired by the index acquiring module is larger than or equal to a threshold;
a fifth determining sub-module (702N) configured to determine a first group of tasks comprising each task having an active index larger than or equal to the threshold decided by the third deciding sub-module;
a sixth determining sub-module (7020) configured to determine a second group of tasks comprising each task having an active index smaller than the threshold decided by the third deciding sub-module;
a seventh ranking sub-module (702P) configured to rank the tasks in the first group determined by the fifth determining sub-module according to a late-to-early order of starting times;
an eighth ranking sub-module (702Q) configured to rank the tasks in the second group determined by the sixth determining sub-module according to a high-to-low order of the active indices; and
a ninth ranking sub-module (702R) configured to rank arrange the first group of tasks before the second group of tasks.

11. The device (700) for presenting tasks according to claim 7, wherein the task ranking module (702) comprises:
a tenth ranking sub-module (702S) configured to rank the tasks according to a high-to-low order of the active indices.

12. The device (700) for presenting tasks according to claim 7, wherein the device further comprises:
an index storing module (704) configured to, after a task is started, update the active index of the task and store the updated active index of the task.

13. A computer program including instructions for executing the steps of a method for presenting tasks according to any one of claims 1 to 6 when said program is executed by a computer.

14. A recording medium readable by a computer and having recorded thereon a computer program including instructions for executing the steps of a method for presenting tasks according to any one of claims 1 to 6.
